# EUROPÄISCHE PATENTSCHRIFT

(11) **EP 0 907 414 B1**
(45) Veröffentlichungstag und Bekanntmachung des Hinweises auf die Patenterteilung: **18.07.2001**
(21) Anmeldenummer: 97929246.3
(22) Anmeldetag: 20.06.1997
(51) Int. Cl.: B01L 3/02, B01L 3/14

(54) **VERFAHREN ZUR DURCHFÜHRUNG CHEMISCHER, INSBESONDERE BIOCHEMISCHER REAKTIONEN UND PIPETTIERSPITZE MIT REAKTIONSGEFÄSS**
METHOD FOR ACHIEVING CHEMICAL, IN PARTICULAR BIOCHEMICAL REACTIONS AND PIPETTE TIP WITH REACTION VESSEL
PROCEDE POUR EFFECTUER DES REACTIONS CHIMIQUES, NOTAMMENT BIOCHIMIQUES, ET POINTE DE PIPETTE AVEC RECIPIENT REACTIONNEL

(30) Priorität: 20.06.1996 DE 19624687
(43) Veröffentlichungstag der Anmeldung: 14.04.1999
(73) Patentinhaber: Hamilton Bonaduz AG, CH-7402 Bonaduz (CH)
(72) Erfinder: HOFSTETTER, Meinrad, CH-7012 Felsberg (CH); LEYSSENS, Herwig, CH-7430 Thusis (CH); ARPAGAUS, Renato, CH-7000 Chur (CH); WESTEDT, Jens, D-65510 Idstein (DE)
(74) Vertreter: Prechtel, Jörg, Dipl.-Phys. Dr.
(86) Internationale Anmeldenummer: EP9703258
(87) Internationale Veröffentlichungsnummer: WO9748491

(56) Entgegenhaltungen:
- EP-A- 0 095 655
- EP-A- 0 411 620
- EP-A- 0 588 564
- EP-A- 0 701 865
- WO-A-83/01912
- WO-A-91/18110
- WO-A-92/20778
- US-A- 3 713 775
- PATENT ABSTRACTS OF JAPAN vol. 095, no. 006, 31.Juli 1995 & JP 07 080331 A (FUJI PHOTO FILM CO LTD), 28.März 1995,

## Beschreibung

Die Erfindung betrifft ein Verfahren zur Durchführung chemischer, insbesondere biochemischer Reaktionen in einer Reaktionsflüssigkeit unter Verwendung einer Pipettierspitze einer Pipettiereinrichtung nach dem Oberbegriff des Anspruchs 1.

Bei der Durchführung von chemischen Reaktionen, insbesondere biochemischen Reaktionen, wird häufig mit Pipettierspitzen gearbeitet, wobei in diesem Zusammenhang unter Pipettierspitze eine Einrichtung meist in Röhrchenform zu verstehen ist, die die dosierte Aufnahme zumeist kleinerer Flüssigkeitsmengen erlaubt. Damit lassen sich schnell und kostengünstig vorgegebene Mengen an Reagenzien oder Probenflüssigkeit aufnehmen. Derartige Pipettierspitzen werden in großen Mengen eingesetzt, insbesondere in Verbindung mit halbautomatischen oder vollautomatischen Analysegeräten.

Aus der EP 0 226 867 B1 ist eine entsprechende Pipette aus Pipettierspitze und in dieser Pipettierspitze verschiebbar angeordnetem Pipettierkolben bekannt. Diese ist manuell bedienbar, oder, wie in dieser Druckschrift näher dargestellt, auch innerhalb einer Analysevorrichtung einsetzbar. Zumeist werden Wegwerf-Pipetten eingesetzt, vorzugsweise aus Kunststoff, um eine Reinigung der Pipette unnötig zu machen und auch die Gefahr auszuschließen, daß bei nicht ausreichender Reinigung Rückstände in der Pipette zurückbleiben, die die anschließenden Messungen verfälschen könnten. Es sind jedoch auch Pipetten aus Metall, Glas oder Kunststoff im Einsatz, die mehrfach einsetzbar sind.

Aus der DE 40 11 584 A1 ist eine Pipettierspitze bekannt, die dem Flüssigkeitsübertrag von Reagenzflüssigkeit aus dem Reagenzflüssigkeitsbehälter zum jeweiligen Reaktionsgefäß über eine Ansaugvorrichtung dient. Im Behälter findet keine Reaktion statt. Dabei können auch den Probengefäßen Pipetten zugeordnet werden, die jedoch neben den Probengefäßen angeordnet sind, wenn diese nicht zum Flüssigkeitsübertrag gebraucht werden.

Aus der WO 92/20778 A1 ist es bekannt, die Spitze einer Pipette zu verschließen, nachdem durch Hochziehen des Kolbens Reaktionsflüssigkeit eingesaugt worden ist. Anschließend wird die verschlossene Pipette in eine Aufnahmeeinrichtung einer Temperiervorrichtung zur Durchführung der pcr-Reaktion eingeführt. Nach Durchführung der pcr-Reaktion kann die äußerste Spitze abgeschnitten werden, um dadurch Reaktionsflüssigkeit ablassen zu können.

Aus der DE 32 53 589 A1 ist ein mehrstufiges Verfahren zur Präparation von Urinproben bekannt. Das Aufnahmegefäß ist hierbei nach unten hin offen, d.h. keinesfalls durch die Pipettenspitze insgesamt geschlossen. Eine Fixierung und gegebenenfalls das Auflösen des Filters passiert in dem durch zwei Verschlußstöpsel geschlossenem Gefäß.

Aus der WO 82/00200 ist es bekannt, Probenmaterial in einen an einem Ende durch ein Sieb verschlossenen Zylinder nach Herausziehen des Kolbens in das nun freie Zylinderende einzuführen. Anschließend wird das Probenmaterial mit Hilfe des in den Zylinder eingeführten Kolbens durch den Filter durchgedrückt, um so in den Raum eines über den Zylinder geschobenen Probengefäßes zu gelangen. Durch mehrmaliges Herrausziehen und Hineinschieben des Kolbens kann der Anteil an freien Zellen in der Probenflüssigkeit erhöht werden.

Bislang werden Pipetten zur Dosierung entsprechender Flüssigkeit eingesetzt, zum Transport einer Probe oder Reagenzien mit vorgegebenem Probenvolumen. Sind bei der Reaktion mehrere Reaktionspartner beteiligt (im folgenden Probenflüssigkeit sowie wenigstens ein Reagenz genannt), wird herkömmlicherweise jeweils mit einer gesonderten Pipette Probenflüssigkeit sowie Reagenz in der gewünschten Menge vom jeweiligen Vorratsbehälter zum Reaktionsgefäß gebracht. Nach Durchführung der Reaktion, z. B. nach Durchführung eines ggf. mehrstufigen Temperaturprogramms mit entsprechender Erhitzung und Abkühlung der Probenflüssigkeit bzw. des Gemisches aus Probenflüssigkeit und Reagenz im Reaktionsbehälter, wird herkömmlicherweise mit Hilfe einer weiteren Pipette wiederum ein gewisses Volumen aus dem Reaktionsgefäß abgezogen und weiter verwertet, insbesondere zur Analyse einer Nachweisapparatur zugeführt.

Diese Vorgehensweise erfordert den Einsatz einer Vielzahl von Pipetten; werden Einmal-Pipetten eingesetzt, so ergeben sich nicht nur hohe Anschaffungskosten, sondern auch Kosten für die Entsorgung der ggf. kontaminierten Pipetten. Zusätzlich muß jeweils ein neues Reaktionsgefäß bereitgestellt werden.

Gravierender ist zumindest bei biochemischen Reaktionen, daß die Umgebung beim Ablassen der Probenflüssigkeit in das Reaktionsgefäß sowie beim anschließenden Aufnehmen einer Probe aus dem Reaktionsgefäß durch Aerosole kontaminiert werden kann. Derartige Kontaminationen können bei einer nachfolgenden Messung das Meßergebnis verfälschen. Bei biochemischen Reaktionen mit höchster Empfindlichkeit, die soweit geht, daß sogar ein einzelnes Molekül (RNA bzw. DNA) aufgrund eines entsprechenden Multiplikationsmechanismus noch detektiert werden kann, können selbst geringste Kontaminationsspuren zu grobfalschen Meßergebnissen führen. Es sei beispielsweise auf die PCR- (Polymerase chain reaction) Technik (EP 0 200 362 B1) sowie auf die NASBA-Technik (EP 0 329 822 B1) hingewiesen.

Wird die Pipettierspitze als Reaktionsgefäß verwendet, wie aus der WO 92/20778 A1 bekannt, wird üblicherweise mit derselben Pipettierspitze aus einzelnen Proben- bzw. Reagenzgefäßen Proben- und Reagenzflüssigkeit aufgenommen, was eine Kontaminationsgefahr für die einzelnen Flüssigkeiten darstellt. Außerdem müssen die Pipettierspitzen durch meist aufwendige Verfahren wie z.B. durch Verschweißen dicht verschlossen werden und nach Ablauf der Reaktion z.B. durch Abschneiden der Spitze der Pipettierspitze wieder geöffnet werden, was u.a. die Bereitstellung einer entsprechenden Schweiß- und Abschneidevorrichtung verlangt.

Der Erfindung liegt die Aufgabe zugrunde, ein Verfahren der eingangs genannten Art anzugeben, welches mit erheblich reduziertem Aufwand durchführbar ist und die Gefahr von Kontaminationen im wesentlichen beseitigt.

Diese Aufgabe wird dadurch gelöst, daß man eine Pipettierspitze einsetzt, in der ein Pipettierkolben axial beweglich und abdichtend geführt ist und daß man während des Ablaufs der Reaktion die Reaktionsraum-Öffnung mittels der Pipettierspitze vollständig luftdicht verschlossen hält.

Erfindungsgemäß wird die Pipettierspitze also nicht nur zur Aufnahme der jeweiligen Flüssigkeit und ggf. Dosierung eingesetzt, sondern auch als Verschluß des Reaktionsraums bzw. der Reaktionsfüssigkeits-Aufnahmeeinheit verwendet. Nach Ablauf der Reaktion in dem Reaktionsraum kann die Pipettierspitze nach der Wiederaufnahme einer gewünschten Menge des Reaktionsgemisches von der Reaktionsfüssigkeits-Aufnahmeeinheit entfernt werden, um das erhaltene Reaktionsgemisch mittels der Pipettierspitze in ein oder mehrere neue Gefäße zu verteilen.

Man erhält ein vollständig geschlossenes System nach der Aufnahme der beteiligten Flüssigkeiten und vor der Auswertung des Reaktionsergebnisses. Die angesprochene Kontaminationsgefahr ist im wesentlichen beseitigt. Es wird lediglich eine einzige Pipettierspitze und eine einzige Reaktionsflüssigkeits-Aufnahmeeinheit benötigt.

Soll die Reaktionsflüssigkeit nach der durchgeführten Reaktion gesondert analysiert werden, z. B. in einer entsprechenden Nachweisapparatur, so kann die die Reaktionsflüssigkeit beherbergende Pipettierspitze nach ihrer Entfernung von der Reaktionsflüssigkeits-Aufnahmeeinheit -zur unmittelbaren Abgabe einer gewünschten Menge an Reaktionsflüssigkeit eingesetzt werden.

Das Ansaugen und Ablassen der jeweiligen Flüssigkeit durch die Pipettierspitze erfolgt durch einen Pipettierkolben. Dieser erlaubt eine besonders präzise Dosierung, da hierzu lediglich die axiale Verschiebung des Pipettierkolbens entsprechend zu steuern ist. Dabei wird vorgeschlagen, daß der Pipettierkolben gegen die Pipettierspitze über wenigstens eine Kolbendichtlippe sowie einen Ölfilm auf der von der Ansaugspitze abgewandten Seite der Dichtlippe abgedichtet ist. Man erhält auf diese Weise einen Verdunstungsschutz, wie auch einen Schutz gegen Aerosolbildung. Unter Umständen kann der Ölfilm auch entfallen, wenn die Gefahr der Aeorsolbildung bzw. die Verdunstungsgefahr nicht so groß ist.

Es wird weiterhin vorgeschlagen, daß die Wandstärke der Reaktionsflüssigkeits-Aufnahmeeinheit so gewählt wird, daß eine optimale thermische Ankopplung der Reaktionsflüssigkeits-Aufnahmeeinheit an eine vorgesehene Erwärmungseinrichtung, insbesondere Heizblock mit an die Reaktionsflüssigkeits-Aufnahmeeinheit formangepaßten Aufnahme garantiert ist. Diese gute thermische Ankopplung ist insbesondere für die PCR-Technik von Bedeutung, da dort mit hoher Präzision und Geschwindigkeit unterschiedliche Temperaturen einzustellen sind.

Zusätzlich kann auch der Innendruck der Reaktionsflüssigkeits-Aufnahmeeinheit erhöht werden, was zu einem Andrücken der Reaktionsflüssigkeits-Aufnahmeeinheit an die Erwärmungseinrichtung und damit einer besseren thermischen Ankopplung führt.

Weiterhin wird vorgeschlagen, daß die Pipettierspitze sowie der Pipettierkolben zur Ansaugöffnung hin im wesentlichen konisch zulaufen, was das Einführen der Pipettierspitze in die Öffnung der Reaktionsflüssigkeits-Aufnahmeeinheit vereinfacht und eine nahezu vollständige Abgabe der Reaktionsflüssigkeit aus der Pipettierspitze erlaubt.

Um bei der Probenentnahme den Pegelstand der jeweiligen Flüssigkeit kontinuierlich feststellen zu können, wird vorgeschlagen, daß die Pipettierspitze und/oder der Pipettierkolben elektrisch leitfähig ausgebildet sind. Der Einsatz einer elektrisch leitfähigen Pipettierspitze zur Pegelmessung ist beispielsweise in der EP 0 226 867 B1 beschrieben.

Durch das angegebene Verfahren spart man gegenüber dem sonst üblichen Verfahren einen Korken oder dergleichen zum Verschließen der Reaktionsflüssigkeits-Aufnahmeeinheit bei der Reaktion und wenigstens eine Pipettierspitze ein.

Dabei ist es vorteilhaft, daß man die Reaktionsflüssigkeit mit der Pipettierspitze bei noch geschlossenem Reaktionsraum aufnimmt, was ein Freisetzen von Aerosolen bei der Entnahme verhindert, wie auch weitgehend beim nachfolgenden Öffnen des Reaktionsraums aufgrund des bei der Aufnahme der Reaktionsflüssigkeit erzeugten, geringfügigen Unterdrucks im Reaktionsraum.

Bevorzugt wird zur Bildung der Reaktionsflüssigkeit zuerst wenigstens eine Probenflüssigkeit in die Pipettierspitze einsaugt und anschließend dem Reagenz in dem Reaktionsraum zuführt. Es ist somit möglich, mit Reagenzien vorbefüllte Reaktionsräume zu verwenden.

Zur Vermischung von einem bzw. dem wenigstens einen Reagenz mit einer bzw. der Probenflüssigkeit in dem Reaktionsraum kann nach dem Verschließen der Reaktionsraum-Öffnung mittels Pipettierspitze die Probenflüssigkeit und das wenigstens eine Reagenz ein- oder mehrmals in die Pipettierspitze eingesaugt und wieder abgelassen werden, wobei ein Freisetzen von Aerosolen bei diesem Vorgang verhindert wird und gleichzeitig eine vollständige Vermischung der beteiligten Flüssigkeiten gewährleistet ist.

Ferner wird vorgeschlagen, daß man die Pipettierspitze in eine Verschlußposition bringt, die bei Ablauf der Reaktion einen sicheren Abschluß des Reaktionsraumes gewährleistet. Dabei kann die Ansaugöffnung der Pipettierspitze jede beliebige Position im Reaktionsraum innehaben.

Weiterhin wird vorgeschlagen, daß beim Ablauf der Reaktion die Ausgangsöffnung in die Reaktionsflüssigkeit eintaucht, vorzugsweise bei zumindest weitgehend entleerter Pipettierspitze. Man erhält damit zwischen Pipettierspitze und Reaktionsflüssigkeits-Aufnahmeeinheit einen ringförmigen Reaktionsraum, in welchen die von der Pipettierspitze verdrängte Reaktionsflüssigkeit einströmt. Damit wird die für den Wärmeübergang sorgende Innenumfangsfläche der Reaktionsflüssigkeits-Aufnahmeeinheit vergrößert bei gleichzeitiger Reduzierung der erforderlichen Eindringtiefe der Wärme in die Reaktionsflüssigkeit.

Ist die Reaktionsflüssigkeits-Aufnahmeeinheit mit einem eine Ausnehmung zur Aufnahme der Reaktionsflüssigkeit aufweisenden Unterteil und einem die Ausnehmung abdeckenden, die Reaktionsraum-Öffnung für die Pipettierspitze aufweisenden Oberteil in Form eines Aufnahmeelements ausgebildet, wird vorgeschlagen, daß man vor dem Aufsetzen des Aufnahmeelements auf das Unterteil dieses mit Reagenz befüllt, daß man vor oder gleichzeitig mit dem Einführen der Pipettierspitze in die Reaktionsraum-Öffnung das Aufnahmeelement, das zusammen mit der Pipettierspitze als Verschluß für das Reaktionsgefäß dient, auf das Unterteil aufsteckt und daß man den Reaktionsraum durch Einsetzen der Pipettierspitze in die Reaktionsraum-Öffnung verschließt.

Es ist somit möglich, größere Reaktionsflüssigkeitsvolumina, die keiner Kontaminationsgefahr unterliegen, mit entsprechend voluminös ausgebildeten Pipetten oder Abgabeeinrichtungen vor dem Aufsetzen des Aufnahmeelements "direkt" in den Reaktionsraum abzugeben und erst anschließend die Reaktionsraum-Öffnung durch Aufsetzen eines Aufnahmeelements auf den Durchmesser der Pipettierspitze zu verengen und mit der Pipettierspitze zu verschließen (oder mit Hilfe eines im Nachfolgenden erläuterten Abdichtelements der Pipettierspitze unmittelbar zu verschließen). Eine Zugabe der größeren Reaktionsflüssigkeitsvolumina bei bereits verschlossenem Reaktionsraum würde dagegen zu einem übermäßig starken Druckanstieg im Reaktionsraum führen. Ein Vorteil des Einsatzes des Aufnahmeelements ist der, daß herkömmliche Pipettierspitzen geringen Durchmessers (d.h. ohne Umfangsbund) eingesetzt werden können.

Weiterhin wird vorgeschlagen, daß man die Pipettierspitze in der Reaktionsraum-Öffnung absenkt bzw. anhebt, während man die Probenflüssigkeit und das wenigstens eine Reagenz in die Pipettierspitze einsaugt und wieder abläßt. Man kann somit die Druckunterschiede, welche beim Ansaugen und Ablassen der Reaktionsflüssigkeit durch die Pipettierspitze in dem Reaktionsraum auftreten durch entsprechendes Absenken bzw. Anheben der Pipettierspitze ausgleichen und ein Austreten von Reaktionsklüssigkeit infolge auftretenden Überdrucks vermeiden.

Die Erfindung betrifft auch eine Pipettierspitze und eine Reaktionsflüssigkeits-Aufnahmeeinheit mit einer durch die Pipettierspitze luftdicht verschließbaren Reaktionsraum-Öffnung zur Durchführung des vorstehend genannten Verfahrens. Die Pipettierspitze ist im Gegensatz zu der oben erwähnten Pipettierspitze aus der bekannten EP 0 226 867 B1 bevorzugt derart ausgebildet, daß die Öffnung des Reaktionsgefäßes durch Einführen eines Vorderabschnittes der Pipettierspitze in den Reaktionsraum, ggf. mit einem zusätzlichem Aufnahmeelement für die Pipettierspitze, verschließbar ist. Dabei kann die Pipettierspitze mit ihrem Außenumfang am Innenumfang der Reaktionsraum-Öffnung abdichtend anliegen. Im Falle eines Ringraums zwischen Außenumfang und Innenumfang kann dieser durch das Abdichtelement der Pipettierspitze überbrückt werden.

Bevorzugt ist die Öffnung des Reaktionsraumes formschlüssig durch die Pipettierspitze verschließbar insbesondere durch Verrasten, wobei die Reaktionsraum-Öffnung alternativ auch reibschlüssig durch die Pipettierspitze verschließbar sein kann. So kann die Pipettierspitze im Bereich ihres Vorderabschnitts mit Rastelementen zum Einrasten in entsprechend ausgebildete Rastausnehmungen ausgebildet sein, oder die Pipettierspitze kann an ihrem Außenumfang mit einer Aufwölbung oder Verdickung versehen sein, welche einen festen Sitz zwischen der Pipettierspitze und der Raktionsflüssigkeits-Aufnahmeeinheit sicherstellt.

Um eine sichere Verbindung zwischen der Pipettierspitze und der Raktionsflüssigkeits-Aufnahmeeinheit zu gewährleisten und gleichzeitig die abzudichtende Fläche der Reaktionsraum-Öffnung klein zu halten, wird vorgeschlagen, daß die Reaktionsraum-Öffnung und der Vorderabschnitt der Pipettierspitze und ggf. der Reaktionsraum zylindrisch ausgebildet sind.

Um die Reaktionsflüssigkeits-Aufnahmeeinheit zuverlässig zu halten, insbesondere nach dem Ablauf der Reaktion in dem Reaktionsraum zur leichteren Entnahme der Reaktionsflüssigkeit mit der Pipettierspitze aus dem Reaktionsraum zur Weiterverwertung, insbesondere zur Analyse in einer Nachweisapperatur, wird vorgeschlagen, daß die Reaktionsflüssigkeits-Aufnahmeeinheit ein Verbindungselement für die Verbindung mit einem Gefäßträger aufweist.

Die Öffnung des Reaktionsgefäßes wird bevorzugt durch Einführen eines Vorderabschnitts der Pipettierspitze in den Reaktionsraum verschlossen, wobei der Vorderabschnitt der Pipettierspitze mit einem Abdichtelement, vorzugsweise Bund versehen sein kann, der gegen die Reaktionsflüssigkeits-Aufnahmeeinheit abgedichtet ist. Das Abdichtelement überbrückt den ggf. vorhandenen Ringspalt zwischen dem Außenumfang der Pipettierspitze und dem Innenumfang der Reaktionsraum-Öffnung, insbesondere für den Fall, daß kein Aufnahmeelement eingesetzt wird. Der Bund läuft vorzugsweise zur Ansaugöffnung hin im wesentlichen konisch zu, was ein leichtes Einführen des Bundes in den Reaktionsraum bei gleichzeitiger guter Dichtwirkung erlaubt. Es wäre aber auch möglich, einen zylindrischen Bund mit entsprechenden Dichtlippen zu verwenden oder den Vorderabschnitt der Pipettierspitze mit einer Dichtung wie z.B. einem Dichtring zu versehen, die gegen die Reaktionsflüssigkeits-Aufnahmeeinheit abgedichtet ist, wobei dann der Bund entfällt. Das Abdichtelement kann auch von einem kappenartigen Vorderabschnitt der Pipettierspitze gebildet sein, der auf die Reaktionsflüssigkeits-Aufnahmeeinheit aufschraubbar oder aufsteckbar ist.

Wenn die Ansaugöffnung der Pipettierspitze- während der Reaktion in die Reaktionsflüssigkeit eintaucht, ist der Pipettierkolben der Pipettierspitze in der Ausstoßposition vorzugsweise selbsthaltend, was ein Absetzen des Reaktionsflüssigkeits-Aufnahmeeinheit und der Pipettierspitze z.B. während des Ablaufes der Reaktion im Reaktionsraum erlaubt, ohne daß auftretende Drücke im Reaktionsraum ein Verschieben des Pipettierkolbens nach oben und damit ein Absinken der Reaktionsflüssigkeit im Reaktionsgefäß bewirken, was zu einer verschlechterten thermischen Ankopplung führen würde.

Ist die Ansaugöffnung während der Reaktion nicht in die Reaktionsflüssigkeit eingetaucht, sondern im öffnungsnahen Bereich angeordnet, kann der Pipettierkolben in Grenzen verschiebbar ausgebildet sein, so daß durch geringfügige vertikale Bewegungen des Pipettierkolbens Druckunterschiede infolge thermischer Einflüsse im luftgefüllten Bereich des abgedichteten Reaktionsraumes ausgeglichen werden können.

Gemäß einer Ausführungsform der Erfindung ist die Reaktionsflüssigkeits-Aufnahmeeinheit durchgehend einstückig ausgebildet und von einem gesonderten Reaktionsgefäß gebildet. Dabei sind aber auch andere Arten von Reaktionsgefäßen mit einem oder ggf. auch mehreren Reaktionsräumen wie z.B. Mikrotiterplatten denkbar.

Gemäß einer weiteren Ausführungsform der Erfindung ist die Reaktionsflüssigkeits-Aufnahmeeinheit mehrteilig ausgebildet, wobei die vorzugsweise plattenförmige Reaktionsflüssigkeits-Aufnahmeeinheit wenigstens eine jeweils einen Reaktionsraum bildende Ausnehmung aufweist. Vorzugsweise ist die Reaktionsflüssigkeits-Aufnahmeeinheit mit einem die wenigstens eine Ausnehmung zur Aufnahme der Reaktionsflüssigkeit aufweisenden Unterteil und einem die wenigstens eine Ausnehmung abdeckenden, die wenigstens eine Reaktionsraum-Öffnung für die Pipettierspitze aufweisenden Oberteil in Form eines Aufnahmeelements ausgebildet. Somit kann bei Verwendung eines einheitlichen Aufnahmeelements und damit einer einheitlichen Pipettierspitzenart je nach Bedarf mit unterschiedlichsten Reaktionsgefäßen gearbeitet werden.

Der Unterteil kann einen im wesentlichen plattenförmigen Unterbau besitzt, welcher wenigstens eine Ausnehmung zur formangepaßten Aufnahme wenigstens eines Reaktionsgefäßes oder einer Mikrotiterplatte oder dergleichen zur Aufnahme der Reaktionsflüssigkeit aufweist. Dabei kann der Unterbau mit Heiz- und Kühlelementen versehen sein, welche die z.B. für die PCR - Reaktion notwendigen Temperaturen bereitstellen.

Weiterhin wird vorgeschlagen, daß das Aufnahmeelement mit einer Mehrzahl von Durchführungen für entsprechende Pipettierspitzen ausgebildet ist, was die Bildung beliebig vieler Reaktionsräume bei Verwendung eines einzigen Aufnahmeelements mit einer entsprechenden Zahl von Reaktionsgefäßen und Pipettierspitzen erlaubt. Dabei können die Reaktionsgefäße Einzelgefäß sein oder in der Art einer Mikrotiterplatte, z.B. in den Formaten von 20, 60 und 96 Kavitäten ä 100 µl, u.a. ausgebildet sein.

Um größere Mengen an kontaminationsunempfindlicher Reaktionsflüssigkeit auf einfache Weise in den Reaktionsraum abgeben zu können, wird vorgeschlagen, daß die Öffnungsweite des Aufnahmeraums größer ist als die Öffnungsweite der Reaktionsraum-Öffnung. Nach abgeschlossener Befüllung des Reaktionsraums wird die Aufnahmeeinheit auf das wenigstens eine Reaktionsgefäß aufgesetzt, wodurch die Öffnungsweite der Reaktionsraum-Öffnung auf das zur Aufnahme der Pipettierspitze nötige Mindestmaß verringert wird.

Bevorzugt ist das Aufnahmeelement mit einer als Reaktionsraum-Öffnung ausgebildeten Durchführung zur Aufnahme der Pipettierspitze versehen, die im reaktionsgefäßnahen Bereich zylindrisch ausgebildet ist und im reaktionsgefäßfernen Bereich mit einer konischen Einlauföffnung versehen ist, wobei der zylindrische Bereich gegen die Pipettierspitze abgedichtet ist.

Dazu wird das Aufnahmeelement derart ausgeführt, daß sich über dem Reaktionsraum eine Bohrung mit integrierter Dichtlippe oder einem entsprechend ausgeführten Dichtring befindet, die durch das Einsetzen der Pipettierspitze luftdicht verschlossen wird.

Um Flüssigkeitsverluste aus dem Reaktionsraum durch Verdampfung und anschließende Kondensation zu vermeiden, kann das Aufnahmeelement beheizbar ausgeführt sein.

Das Aufnahmeelement kann als Einweg - Aufnahmeelement z.B. aus einem recyclefähigem Kunststoff ausgebildet sein, bevorzugt ist das Aufnahmeelement aber zur Wiederverwendung vorgesehen und wird nach jeder Benutzung den gängigen Reinigungsverfahren, wie Bleichlaugenbehandlung und Dampfsterilisation (Autoklavieren), zur Vermeidung von Kontaminationen unterzogen. Um eine aggressive Reinigung zu vermeiden kann das Aufnahmeelement auch mit einer auswechselbaren Beschichtung z.B. in Form einer Schutzfolie überzogen sein.

Diese Beschichtung kann z.B. als wachsartige Substanz mit einem Schmelzpunkt von z.B. über 250°C vorgesehen sein, welche durch Eintauchen des Aufnahmeelementes in ein entsprechendes Bad auf das Aufnahmeelement aufgebracht wird und nach der Reaktion abgeschmolzen werden kann. Die Beschichtung ist vorzugsweise wenigstens an der Unterseite des Aufnahmeelementes vorgesehen und schützt dieses gegen Kontaminationen durch die Reaktionsflüssigkeit im Reaktionsraum.

Alternativ kann eine Beschichtung oder Schutzfolie auch als Abdeckung über der Reaktionsgefäß-Öffnung am Reaktionsgefäß vorgesehen sein, auf die das Aufnahmeelement aufgesetzt werden kann, ohne mit Reaktionsgemisch in direkten Kontakt zu treten. Es ist somit möglich vorgefüllte Reaktionsgefäße oder Mikrotiterpatten bereitzustellen, die durch eine Schutzfolie lagerfähig verschlossen sind, wobei die Schutzfolie im Bedarfsfall durch die Spitze der Pipettierspitze durchstoßen wird, um z.B. Probenflüssigkeit dem Reagenz im Reaktionsgefäß zuzugeben.

Die Erfindung wird im folgenden anhand mehrerer Ausführungsbeispiele an der beigefügten Zeichnung erläutert. Es zeigt:
- Fig. 1: einen vereinfachten Vertikalschnitt einer erfindungsgemäß ausgebildeten Pipette mit einem konischen Bund bei der Aufnahme von Probenflüssigkeit gemäß einer ersten Ausführungsform der Erfindung;
- Fig. 2: den vereinfachten Vertikalschnitt eines erfindungsgemäß ausgebildeten Reaktionsgefäßes, welches mit Reagenz vorgefüllt ist;
- Fig. 3: das Einführen der Pipettierspitze gemäß Fig. 1 in das Reaktionsgefäß gemäß Fig. 2 und anschließendes Einbringen der Probenflüssigkeit in das vorgefüllte Reaktionsgefäß;
- Fig. 4: die Pipettierspitze gemäß Fig. 1 beim Verschließen des Reaktionsgefäßes;
- Fig. 5: das anschließende Vermischen der Probenflüssigkeit mit den Reagenzien bei verschlossenem Reaktionsgefäß;
- Fig. 6: das Reaktionsgefäß mit eingesteckter Pipettierspitze, eingesetzt in einen Heizblock einer weiter nicht dargestellten Einrichtung zur Durchführung eines vorgegebenen Temperaturprogramms, um eine gewünschte biochemische Reaktion innerhalb des Reaktionsgefäßes zu erhalten;
- Fig. 7: das Aufnehmen des Reaktionsgemisches durch die Pipettierspitze bei geschlossenem Reaktionsgefäß;
- Fig. 8: das anschließende Öffnen des in einen Gefäßträger eingesetzten Reaktionsgefäßes und Entnehmen von Reaktionsflüssigkeit;
- Fig. 9: einen vereinfachten Vertikalschnitt der erfindungsgemäß ausgebildeten Reaktionsgefäße mit Reagenzflüssigkeitsgemisch im Reaktionsgefäß;
- Fig. 10: die Anordnung aus Figur 9 mit aufgesetztem Aufnahmeelement für die Pipettierspitze;
- Fig. 11: die Anordnung gem. Figur 10 mit aufgeschweißter Abdeckfolie zwischen Aufnahmeelement und Reaktionsgefäß;
- Fig. 12: die Anordnung aus Figur 10 mit Pipettierspitze im Vertikalschnitt bei der Zuführung von Probenflüssigkeit, bzw. einem der Reaktionspartner;
- Fig. 13: die Anordnung aus Figur 12 beim Durchmischen des Reaktionsgemisches nach der Zugabe der Probenflüssigkeit mit abgesenkter Pipettierspitze;
- Fig. 14: die Anordnung aus Figur 12 während des Reaktionsablaufes mit der Pipettierspitze als Verschluß des Reaktionsraumes;
- Fig. 15: die Anordnung aus Figur 14 nach Beendigung des Reaktionsablaufes bei der Entnahme des Reaktionsgemisches aus dem weiterhin verschlossenen Reaktionsraum mit abgesenkter Pipettierspitze.
- Fig. 16: die Anordnung aus Figur 15 nach dem Herausziehen der Pipette mit dem Reaktionsgemisch aus dem Reaktionsgefäß mit Aufnahmeelement.

Mit der nachfolgend im einzelnen beschriebenen Pipette mit Reaktionsgefäß und ggf. Aufnahmeelement, lassen sich chemische, insbesondere biochemische Verfahren unter extrem geringen Materialaufwand durchführen, bei ebenfalls extrem reduzierter Kontaminationsgefahr.

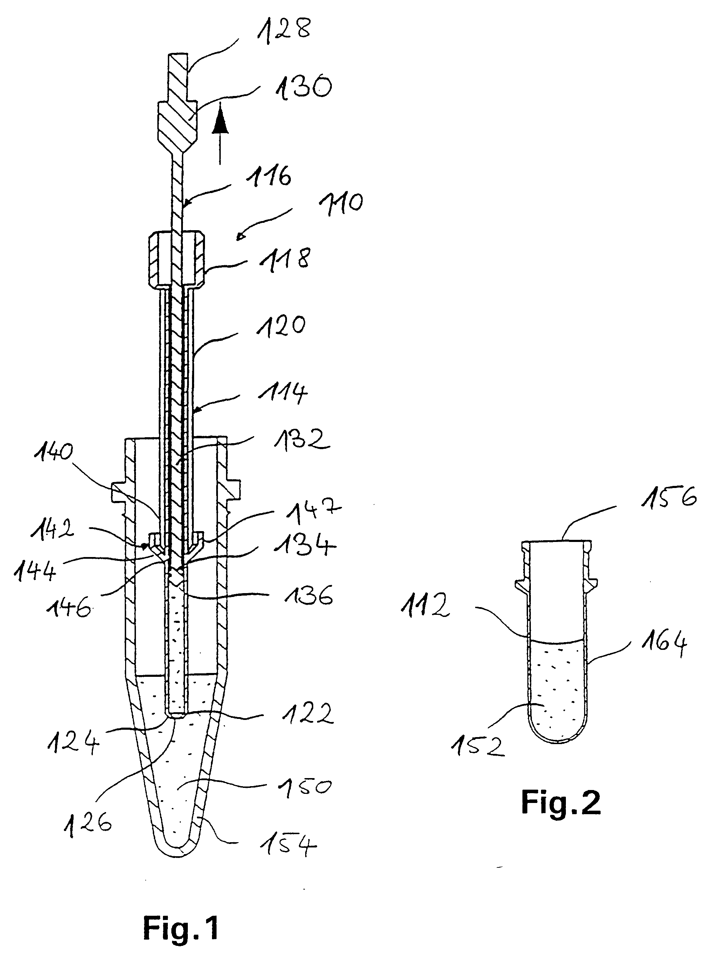

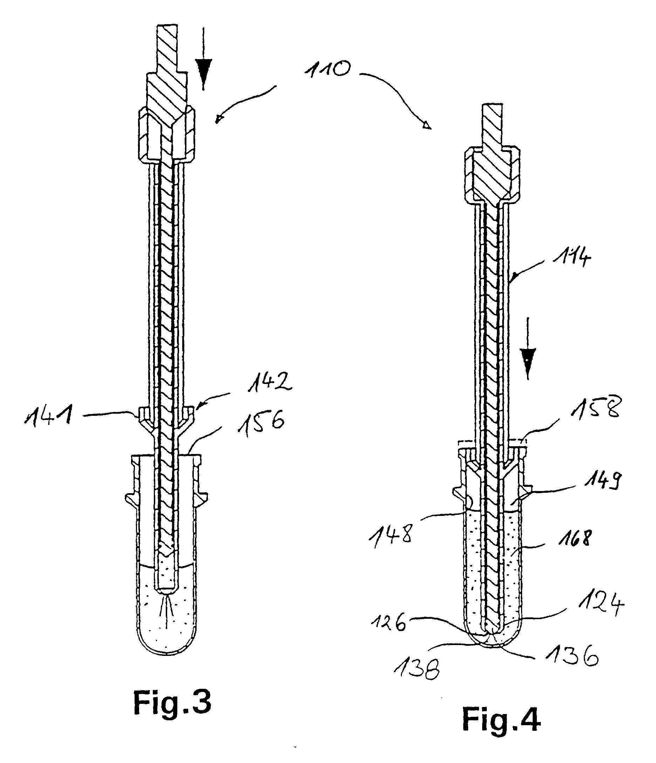

Die Pipette, wie diese in ihrer ersten Ausführungsform gem. Fig. 1 - 8 dargestellt ist, und dabei das Bezugszeichen 110 trägt, dient bei dieser Ausführungsform als Verschluß für das Reaktionsgefäß 112 in Fig. 2 und ist Teil einer nicht dargestellten Pipettiereinrichtung. Eine solche ist in der EP 0 226 867 B1 dargestellt, wenn auch dort mit einer Vielzahl weiterer Einzelpipetten, von denen erfindungsgemäß einige entfallen können. Die Pipette 110 besteht aus der Pipettierspitze 114 und in dieser axial beweglich gelagerten Pipettierkolbenanordnung 116. Nicht dargestellte Teile der Pipettiereinrichtung dienen der Halterung der Pipettierspitze 114 sowie der Halterung und der gewünschten Axialbewegung der Pipettenkolbenanordnung 116.

An ihrem oberen offenen Ende weist die Pipettierspitze 114 einen Halterungsbund 118 auf, an den sich ein zylindrischer Abschnitt 120 anschließt, welcher sich in einem im wesentlichen konischen, sich zum unteren Pipettenende hin verjüngenden Abschnitt 122 fortsetzt und eine Ansaugöffnung 126 am unteres Ende 124 der Pipettierspitze bildet.

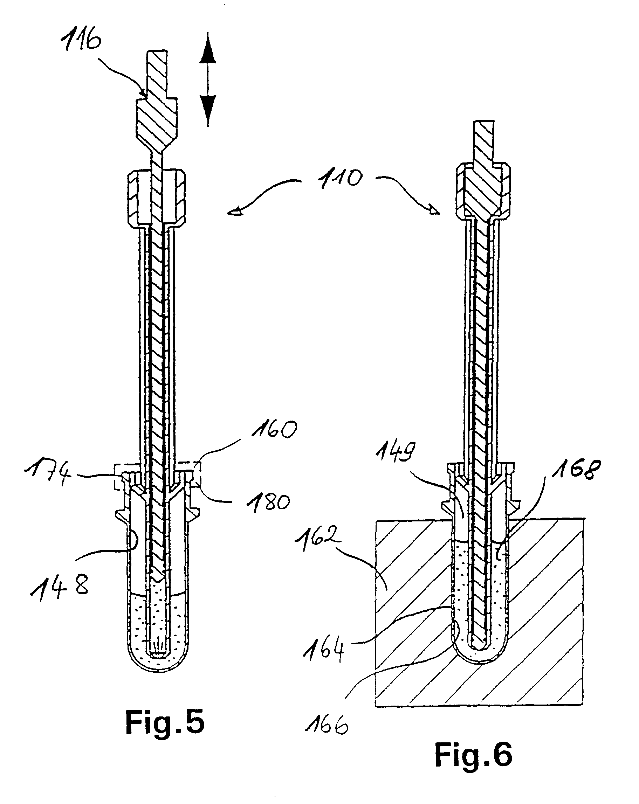

Das obere Ende der Pipettierkolbenanordnung 116 ist in der Fig. 1 mit einem zylindrischen Halterungsabschnitt 128 versehen, an den ein nicht dargestelltes Betätigungselement der Pipettiereinrichtung angreift. Es schließt sich ein durchmesservergrößerter Abschnitt 130 an, der in seiner untersten Stellung gemäß Fig. 1 den erwähnten Halterungsbund 118 im wesentlichen ausfüllt und auf diese Weise einen gewissen Auszugswiderstand herstellt, der ein ungewolltes Verschieben der Pipettierkolbenanordnung 116 aus ihrer untersten Stellung verhindert (z.B. bei Überdruck im Reaktionsgefäß in der Anordnung gemäß Fig. 6).

An den Abschnitt 130 schließt sich ein Kolbenstangenabschnitt 132 an. Auf diesen folgt ein eigentlicher Kolben 134, welcher in sämtlichen Axialstellungen der Pipettierkolbenanordnung 116 relativ zur Pipettierspitze 114 abdichtend am Innenumfang des zylindrischen Abschnitts 120 der Pipettierspitze 114 anliegt.

Auf den Kolben 134 folgt ein Füllstück 136, welches in der Ausstoßposition gemäß Fig. 4 den konischen Abschnitt 124 vollständig ausfüllt, wozu das Füllstück 136 dementsprechend komplementär konisch ausgebildet ist. Das Füllstück 136 ragt mit einem konischen Endabschnitt 138 nach unten über die Ansaugöffnung 126 vor. Auf diese Weise wird die Ansaugöffnung 126 zuverlässig geschlossen.

An der Außenumfangsfläche 140 eines Vorderabschnitts 141 weist die Pipettierspitze 114 einen Bund 142 auf, der sich nach unten zur Ansaugöffnung 126 hin im wesentlichen konisch verjüngt, und der zum oberen Pipettenende hin zylindrisch ausgebildet ist. Der Bund 142 ist nur an dem unteren Ende des konischen Abschnitts 144 bei 146 integral mit der Pipettierspitze 114 verbunden. Der zylindrische Abschnitt 147 liegt in der Verschlußstellung (Fig. 4) an der Innenumfangsfläche 148 des Reaktionsgefäßes 112 unter geringer radialer Vorspannung an, um eine zuverlässige Abdichtung zu erhalten, ohne die Gefahr, daß sich die Pipettierspitze 114 ungewollt vom Reaktionsgefäß 112 löst. Zusätzliche kann eine (nicht dargestellte) Rastverbindung vorgesehen sein.

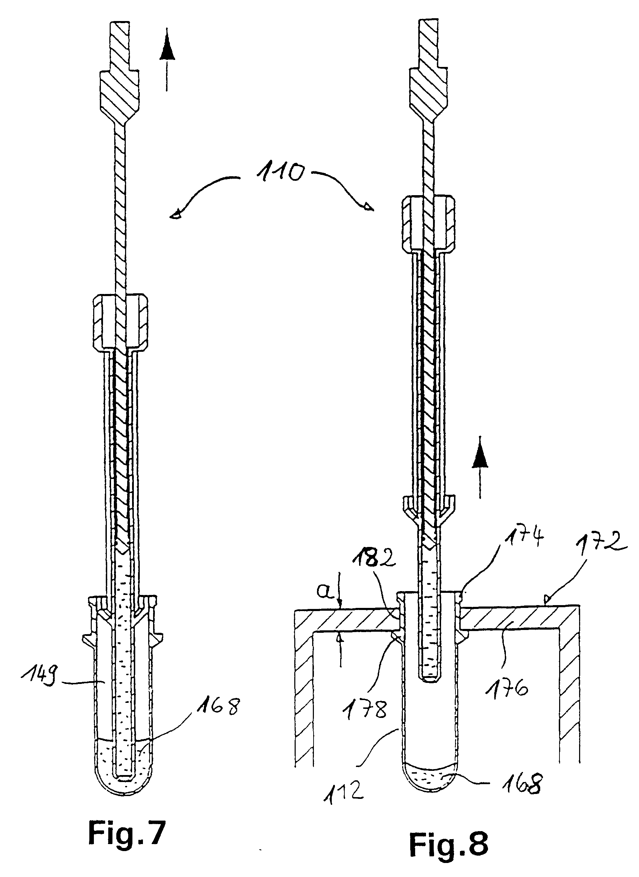

Die Pipette 110 wird erfindungsgemäß nicht nur, wie in Fig. 1 angedeutet, zur Flüssigkeitsaufnahme eingesetzt, sondern auch für das Verschließen des Reaktionsraums 149 des Reaktionsgefäßes 112 (Fig. 4), das Mischen der Probenflüssigkeit 150 mit den Reagenzien 152 (Fig. 5) sowie für die anschließende Flüssigkeitsabgabe (Fig. 8) für eine nachfolgende Analyse.

In Fig. 1 ist die Probenaufnahmephase dargestellt. Dazu taucht die Ansaugöffnung 126 der Pipettierspitze 114 in eine aufzunehmende Probenflüssigkeit 150 innerhalb eines oben offenen Gefäßes 154 ein. Diese Position kann insbesondere dadurch automatisch angefahren werden, daß die Pipettierspitze 114 und/oder die Pipettierkolbenanordnung 116 elektrisch leitfähig ausgebildet sind und Teil eines elektronischen Stromkreises bildet mit entsprechender Nachweiselektronik zur Feststellung eines Kontaktes mit dem Flüssigkeitspegel. Durch Herausziehen der Pipettierkolbenanordnung 116 aus der Pipettierspitze 114 (gem. Fig. 1 mit entsprechend dem Absinken des Pegels fortwährend abgesenkter Pipettierspitze 114, bzw. angehobenem Gefäß 154) kann dann eine gewünschte Flüssigkeitsmenge in die Pipettierspitze 114 eingesaugt werden. Falls für die nachfolgende Reaktion gewünscht, kann auch ein Gasvolumen mit eingesaugt werden.

Sollen mehrere Flüssigkeiten eingesaugt werden, so ist der Ansaugvorgang dementsprechend zu wiederholen. Falls Kontamination durch eine der einzusaugenden Flüssigkeiten, insbesondere eine Probenflüssigkeit, zu befürchten ist, so wird diese zuletzt eingesaugt.

Anschließend wird die aufgenommene Probenflüssigkeit in das bereitgestellte Reaktionsgefäß 112 abgegeben, wie in Fig. 3 angedeutet ist. Durch Einführen der Pipettierspitze 114 in das Reaktionsgefäß 112 wird die Gefäßöffnung 156 anschließend verschlossen.

Dies erfolgt, wie in der Fig. 4 dargestellt, dadurch, daß die Pipettierspitze 114 mit der Ansaugöffnung 126 voraus in die Gefäßöffnung 156 eingeführt wird, wobei der konische Abschnitt 144 nach Anlage am Rand der Gefäßöffnung 156 diese geringfügig aufweitet und/oder vom Rand geringfügig gestaucht wird (z.B. bei Reaktionsgefäßen aus Glas), so daß anschliessend der zylindrische Abschnitt 147 am Innenumfang 148 unter radialer Vorspannung abdichtend anliegt.

Um das positionsgenaue Einsetzen des Bundes 142 in das Reaktionsgefäß 112 zu erleichtern, kann der Bund 142 an seinem oberen Ende mit einem Anschlag 158 versehen sein, wie in Fig. 4 gestrichelt angedeutet ist. Alternativ hierzu kann der Bund 142 als Verschlußkappe (in Fig. 5 gestrichelt angedeutet) ausgebildet sein, die einen oberen Rand 174 des Reaktionsgefäßes 112 ggf. mit einem Rastelement übergreift.

Durch Herausziehen und Einschieben der Pipettierkolbenanordnung 116 aus bzw. in die Pipettierspitze 114 können die Reagenzien 152 mit der Probeflüssigkeit 150 bei verschlossenem Reaktionsgefäß 112 vollständig vermischt werden, wie in Fig. 5 dargestellt ist. Das hierfür erforderliche Ausgleichsvolumen im Reaktionsgefäß 112 wird vom angedeuteten Luftvolumen oberhalb der Reaktionsflüssigkeit bereitgestellt. Alternativ kommt auch eine Faltenbalgkonstruktion oder dergleichen in Frage.

Das Reaktionsgefäß 112 kann nun zur Durchführung der gewünschten biochemischen Reaktion einer entsprechenden Einrichtung zugeführt werden. Im Falle der PCR-Technik wird die Reaktionsflüssigkeit innerhalb des Reaktionsgefäßes 112 einem Temperaturprogramm unterworfen. In Fig. 6 ist dies vereinfacht dadurch angedeutet, daß das Reaktionsgefäß 112 in einen Heizblock 162 einer im übrigen nicht dargestellten Einrichtung zur Durchführung des gewünschten Temperaturprogramms eingeführt ist. Der Heizblock 162 ist mit einer an die Zylinderform des Abschnitts 164 des Reaktionsgefäßes 112 angepaßten Aufnahme 166 versehen. Auf diese Weise ergibt sich vollflächiger Kontakt, der für einen schnellen Wärmeübergang sorgt.

Zur schnellen Erwärmung der Reaktionsflüssigkeit 168 in dem Reaktionsgefäß 112 wird die Pipettierspitze 114 in die Reaktionsflüssigkeit 168 eingetaucht, wobei die Pipettierkolbenanordnung 116 nach unten abgesenkt ist, so daß sich ein ringförmiger Reaktionsraum 149 zwischen dem Außenumfang 140 der Pipettierspitze 114 und dem Innenumfang 148 des Reaktionsgefäßes 112 ausbildet mit vergleichsweise großer Benetzungsfläche zur Verbesserung des Wärmeübergangs. Zusätzlich kann auch der Innendruck des Reaktionsgefäßes durch Absenken der Pipettierkolbenanordnung 116 erhöht werden, was (zumindest bei einem Kunststoff-Reaktionsgefäß) zum Aufdehnen des Reaktionsgefäßes 112 und damit zu einem engen Anliegen des Reaktionsgefäßes 112 an der Aufnahme 166 führt.

Nach abgeschlossener Reaktion wird das Reaktionsgefäß 112 aus der Ausnehmung 166 des Heizblocks 162 entfernt. Um nun eine Analyse der Flüssigkeit 168 in dem Reaktionsgefäß 112 durchführen zu können, wird die Reaktionsflüssigkeit 168 bei weiterhin verschlossenem Reaktionsgefäß 112 in die Pipettierspitze 114 eingesaugt, wie dies in Fig. 7 angedeutet ist. Dabei wird in dem Reaktionsgefäß 112 ein geringer Unterdruck erzeugt, der beim nachfolgenden Öffnen des Reaktionsgefäßes 112 durch Entfernen der Pipettierspitze 114 ein Freisetzen von Aerosolen weitgehend verhindert.

Zur Lagerung oder zum Öffnen oder für sonstige Manipulationen, kann das Reaktionsgefäß 112, wie in Fig. 8 dargestellt, in einen Gefäßträger 172 gesteckt werden, der das Reaktionsgefäß 112 zuverlässig hält und ein Verrutschen des Reaktionsgefäßes 112 oder sogar Verschütten von Reaktionsflüssigkeit 168 verhindert. Der Rand 174 des Reaktionsgefäßes 112 ist hierzu radial nach außen verdickt ausgebildet. In einer, der Dicke a der Auflageplatte 176 des Gefäßträgers 172 entsprechenden Entfernung vom Rand 174, ist ein vom Außenumfang des Reaktionsgefäßes 112 radial nach außen vorstehender Umfangsbund 178 vorgesehen, welcher sich zum unteren, geschlossenen Ende des Reaktionsgefäßes 112 hin im wesentlichen konisch verjüngt. Zum Einsetzen des Reaktionsgefäßes 112 in den Gefäßträger 172 wird das Gefäß mit seinem geschlossenen Ende voraus von oben in eine entsprechend geformte Einstecköffnung 182 des Gefäßträgers 172 eingesetzt, bis, nach momentaner Stauchung des Umfangsbundes 178 (erleichtert durch die Konusform) , ggf. auch der Pipettierspitze in diesem Bereich, die in Fig. 8 dargestellte Lagerposition 112' des Gefäßes 112 erreicht ist.

Für das eben beschriebene Verfahren läßt sich auch ein herkömmliches Probengefäß, z.B. Glasgefäß, einsetzen.

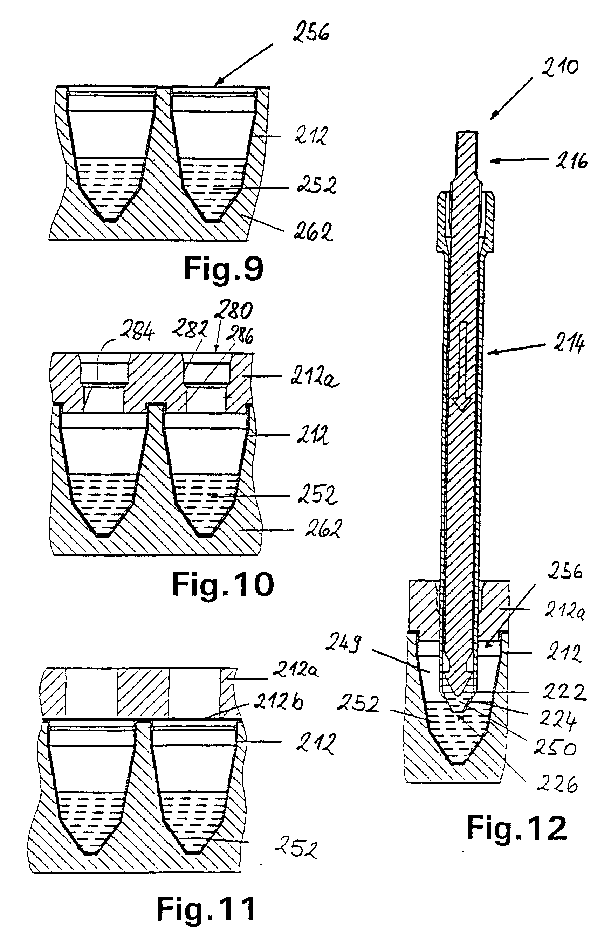

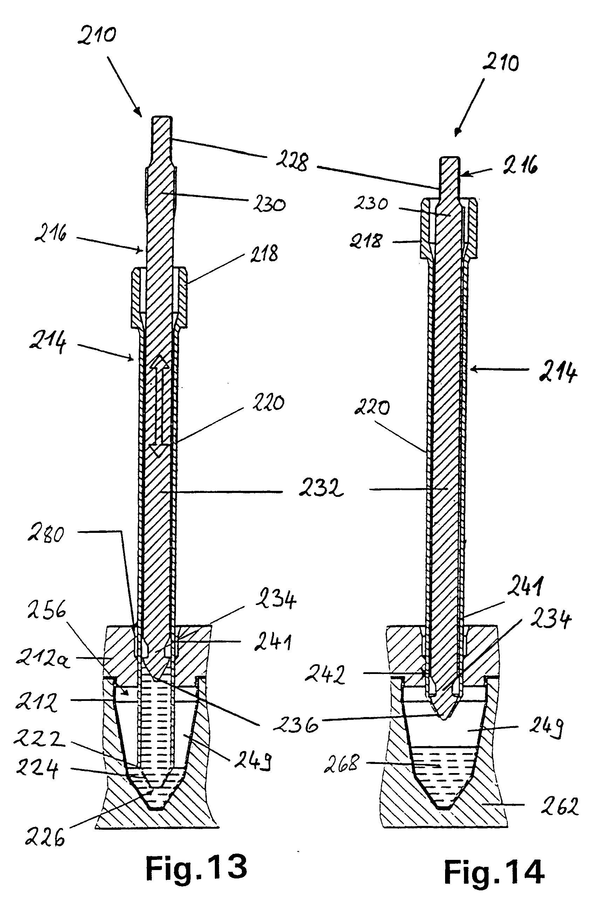

Die Fig. 9 - 15 zeigen eine weitere, mit 210 bezeichnete Ausführungsform der Pipette. Die Pipette 210 dient bei dieser Ausführungsform in Verbindung mit einem Aufnahmeelement 212a als Verschluß für den Reaktionsraum 249 des Reaktionsgefäßes 212 in Fig. 14, wobei Bauelemente, die solchen der ersten Ausführungsform entsprechen, mit denselben Bezugsziffern, jeweils vermehrt um die Zahl 100, versehen sind. Es wird im folgenden nur auf die Unterschiede eingegangen, so daß im übrigen auf die Beschreibung des ersten Ausführungsbeispieles verwiesen sei.

Die Pipettierspitze 214 weist in der zweiten Ausführungsform gem. Fig. 14 an der Außenumfangsfläche 240 eines Vorderabschnittes 241 eine Verdickung 242 auf, die in der Verschlußposition, wie in Fig. 14 dargestellt, die Bohrung 280 des Aufnahmeelementes 212a unter geringfügiger, radialer Vorspannung luftdicht verschließt. Dazu ist die Bohrung 280 im Aufnahmeelement 212a gem. Fig.10 derart ausgeführt, daß sie im oberen Teil 282 im Innenumfang 284 konisch zuläuft, um ein positionsgenaues Einsetzen der Pipettierspitze 214 zu gewährleisten. Im unteren Teil 286 ist die Bohrung 280 zur Abdichtung des Reaktionsraums 249 zylindrisch ausgebildet.

Das Aufnahmeelement 212a wird auf das Reaktionsgefäß 212 nach Zugabe eines Teiles der Reaktionsflüssigkeit 252 gem. Fig. 9 und Fig. 10 manuell oder automatisch derart aufgesetzt, daß es auf dem Reaktionsgefäß 212 formschlüssig und/oder reibschlüssig und luftdicht aufliegt. Dabei erfolgt die Abdichtung zwischen dem Reaktionsgefäß 212 und dem Aufnahmeelement 212a vorzugsweise reibschlüssig durch entsprechende Dichtlippen oder einen Dichtring, ggf. unter Zuhilfenahme einer zusätzlichen Schutzfolie 212b gem. Fig. 11 oder durch Verrasten mit einem nicht dargestellten Gefäßträger. Das Aufnahmeelement 212a dient in dieser Ausführungsform zum einen der Halterung und Stabilisierung der als Gefäßverschluß eingesetzten Pipette 210, als auch zur Reduzierung des Gefäßöffnungsdurchmessers 256 des Reaktionsgefäßes 212 mittels der Bohrung 280 im Aufnahmeelement 212a.

Dieses Vorgehen ergibt sich aus der Notwendigkeit, größere Reaktionsflüssigkeitsvolumina 252, bei denen keine Kontaminationsgefahr besteht, sicher in das Reaktionsgefäß 212 gem. Fig. 9 (d.h. bei entferntem Aufnahmeelement 212a) vorlegen zu können. Würde man diese größeren Volumina nach dem Aufsetzen des Aufnahmeelementes 212a auf das Reaktionsgefäß 212 und anschließender Abdichtung mit der Pipettierspitze 214 in das nun luftdicht verschlossene Reaktionsgefäß 212 zugeben, so bestünde die Gefahr, daß schon während des Einfüllens der Reaktionsflüssigkeit 268 in das Reaktionsgefäß 212 durch die auftretenden hohen Innendrücke Reaktionsflüssigkeit 268 an der Dichtlippe des Pipettierkolbens 216 vorbei innerhalb der Pipettierspitze 214 nach oben verdrängt wird.

Die Zugabe kleiner Reagenz- und insbesondere kontaminationsempfindlicher Probenvolumina 250 im verschlossenen Reaktionsgefäß 212 ist dagegen unkritisch, insbesondere da gem. Fig 12 direkt in die Vorlage 252 pipettiert wird.

Beim Durchmischen der Reaktionsflüssigkeit 252 gem. Fig. 13 kann die Pipettierspitze 214 alternierend zum Pipettierkolben 216 zum Druckausgleich im verschlossenen Reaktionsgefäß 212 im Aufnahmeelement 212a hin und her verschoben werden. So wird die Pipettierspitze 214 während des Ansaugens von Reaktionsflüssigkeit 268 im Reaktionsgefäß 212 in der Öffnung des Aufnahmeelements abgesenkt, wohingegen beim Ablassen von Reaktionsflüssigkeit die Pipettierspitze angehoben wird.

Zur Durchführung der Proben-Zugabe 250 gem. Fig. 12 und des Mischens gem. Fig. 13 mit der Reaktionsflüssigkeit 252 wird die Pipettierspitze 214 mit ihrer Dichtung oder Verdickung 242 durch die Bohrung 280 des Aufnahmelementes 212a geschoben. Zum Verschluß des Reaktionsgefäßes 212 mit dem Aufnahmeelement 212a wird die Pipettierspitze 214 in einer nicht dargestellten Pipettiereinrichtung anschließend nach oben gezogen bis die Dichtung 242 in der Bohrung 280 des Aufnahmelementes 212a im unteren zylindrischen Abschnitt 286 unter Vorspannung anliegt und die Pipettierspitze 214 mit dem Aufnahmeelement 212a zuverlässig verschließt.

Das Reaktionsgefäß 212 kann nun zur Durchführung der gewünschten biochemischen Reaktion eingesetzt werden. Im Falle der PCR-Technik wird die Reaktionsflüssigkeit innerhalb des Reaktionsgefäßes 212 einem Temperaturprogramm unterworfen. In den Fig. 9 bis 15 ist dies vereinfacht dadurch angedeutet, daß das Reaktionsgefäß 212 in einem Heizblock 262 einer ansonsten nicht dargestellten Temperiereinrichtung eingeführt ist. Zur Vermeidung von Flüssigkeitsverslusten durch Verdampfung und anschließende Kondensation aufgrund hoher Temperaturdifferenzen, ist insbesondere in diesem Falle vorgesehen, das Aufnahmeelement 212a auf ca. 80 - 90 °C zu erwärmen.

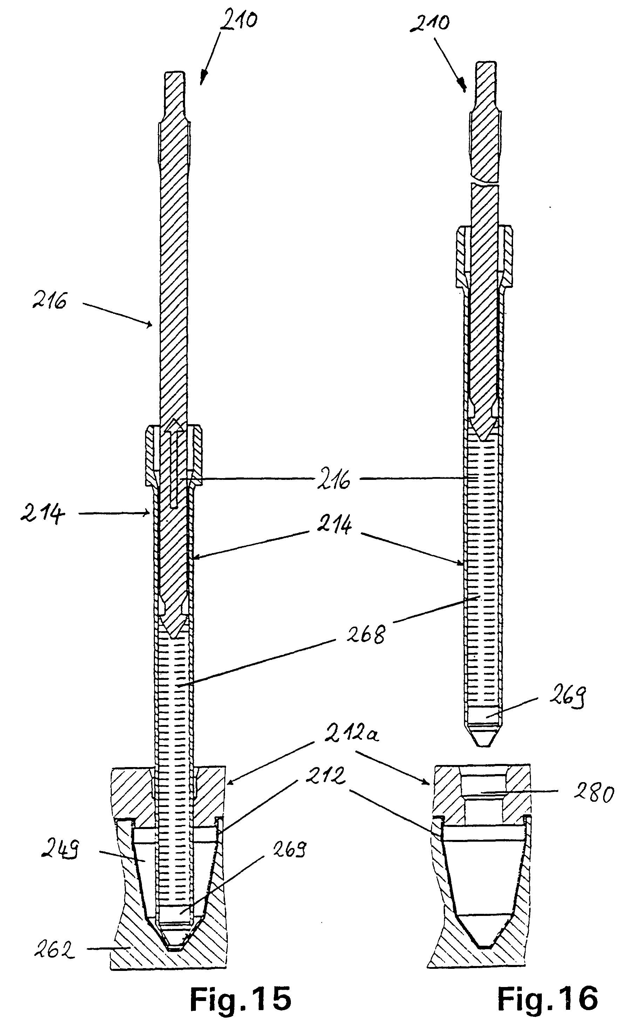

Zur Entnahme der Reaktionsflüssigkeit 268 aus dem Reaktionsgefäß 212 wird die Pipettierspitze 214 gem. Fig. 15 bei gleichzeitigem Ausziehen des Pipettierkolbens 216 dergestalt abgesenkt, das ein Teil oder die gesamte Reaktionsflüssigkeit 268 in die Pipettierspitze 214 aufgenommen wird. Sollte es zur Vermeidung von Kontaminationen gewünscht sein, kann während des Herausziehens der Pipettierspitze 214 aus dem Aufnahmeelement 212a der Pipettierkolben 216 weiter herausgezogen werden, um zur Erzeugung eines Unterdruckes im weiterhin verschlossenen Reaktionsgefäß 212 zusätzlich Luft in die Pipettierspitze 214 aufzusaugen. Anschließend wird die Pipettierspitze 214 gem. Fig. 16 aus dem Aufnahmeelement 212a herausgezogen und die so aufgenommene Reaktionsflüssigkeit 268 kann dann ohne Kontaminationsgefahr weiteren Analysen zugeführt werden.

Das kontaminierte Reaktionsgefäß 212 wird, nachdem das Aufnahmeelement 212a außerhalb der nicht dargestellten Pipettiereinrichtung abgenommen wurde, entsorgt. Das Aufnahmeelement 212a kann nach entsprechender Reinigung oder Aufbereitung der Pipettiereinrichtung zur erneuten Verwendung wieder zugeführt werden.

Mit den vorstehend beschriebenen Varianten der Pipette bzw. Pipettierspitze, mit Reaktionsgefäß und ihren verschiedenen Verschlußmöglichkeiten, lassen sich beliebige chemische Reaktionen durchführen, mit besonderen Vorteilen biochemischer Reaktionen aufgrund ihrer hohen Kontaminationsempfindlichkeit. Mit einer einzigen Pipettierspitze mit Reaktionsgefäß, können im geschlossenen System sowohl die erforderlichen Flüssigkeiten aufgenommen werden als auch anschließend die gewünschte Reaktion durchgeführt werden.

Das verschlossene Reaktionsgefäß wird gem. Fig. 1 - 8 von Reaktionsgefäß und eingesteckter Pipettierspitze gebildet, und gem. Fig. 9 - 14 wird das verschlossene Reaktionsgefäß von Reaktionsgefäß mit aufgesetztem Aufnahmeelement und eingesteckter Pipettierspitze gebildet. Anschließend erlaubt die vom Reaktionsgefäß gelöste Pipettierspitze die ggf. feindosierte Abgabe von Flüssigkeit aus der Pipettierspitze an nachfolgende Untersuchungsstufen. Da lediglich eine einzige Pipettierspitze benötigt wird, ist auch der Material- und Entsorgungsaufwand gering.

## Patentansprüche

1. Verfahren zur Durchführung chemischer, insbesondere biochemischer Reaktionen in einer Reaktionsflüssigkeit (168; 268) unter Verwendung einer Pipettierspitze (114; 214) einer Pipettiereinrichtung mittels derer Reaktionsflüssigkeit (168; 268) durch eine Ansaugöffnung (126; 226) der Pipettierspitze (114; 214) aufnehmbar ist zur nachfolgenden Abgabe in einen Reaktionsraum (149; 249) einer Reaktionsflüssigkeits-Aufnahmeeinheit (112; 212, 212a), wobei man wenigstens einen Teil bzw. Teilbestandteil der Reaktionsflüssigkeit (168; 268) mit der Pipettierspitze (114; 214) in den Reaktionsraum (149; 249) überführt und zum Abschluß des Reaktionsraums (149; 249) eine Reaktionsraum-Öffnung (156; 280) mittels der Pipettierspitze (114, 142; 214) der Pipettiereinrichtung verschließt, wobei die Ansaugöffnung (126; 226) der Pipettierspitze innerhalb des Reaktionsraums (149; 249) liegt, und wobei man die Reaktion im Reaktionsraum (149; 249) ablaufen läßt,
**dadurch gekennzeichnet,**
daß man eine Pipettierspitze (114, 142; 214) einsetzt, in der ein Pipettierkolben (134) axial beweglich und abdichtend geführt ist und daß man während des Ablaufs der Reaktion die Reaktionsraum-Öffnung (156; 280) mittels der Pipettierspitze (114, 142; 214) vollständig luftdicht verschlossen hält.

2. Verfahren nach Anspruch 1, dadurch gekennzeichnet, daß man nach Ablauf der Reaktion in dem Reaktionsraum (149; 249) die Verbindung zwischen Reaktionsflüssigkeits-Aufnahmeeinheit (112; 212, 212a) und Pipettierspitze (114; 214) löst und die Reaktionsflüssigkeit (168; 268) wenigstens teilweise mit der Pipettierspitze (114; 214) aus dem Reaktionsraum (149; 249) entnimmt zur Weiterverwertung, insbesondere zur Analyse in einer Nachweisapparatur.

3. Verfahren nach Anspruch 2, dadurch gekennzeichnet, daß man die Reaktionsflüssigkeit (168; 268) mit der Pipettierspitze (114; 214) bei geschlossenem Reaktionsraum (149; 249) aufnimmt.

4. Verfahren nach Anspruch 3, dadurch gekennzeichnet, daß man beim Aufnehmen der Reaktionsflüssigkeit (168; 268) in dem Reaktionsraum (149; 249) einen Unterdruck erzeugt.

5. Verfahren nach einem der Ansprüche 1 bis 4, dadurch gekennzeichnet, daß man zur Bildung der Reaktionsflüssigkeit (168; 268) zuerst wenigstens eine Probenflüssigkeit (150; 250) in die Pipettierspitze (114; 214) einsaugt und anschließend dem Reagenz (152; 252) in dem Reaktionsraum (149; 249) zuführt.

6. Verfahren nach einem der Ansprüche 1 bis 5, dadurch gekennzeichnet, daß man zur Vermischung von einem bzw. dem wenigstens einen Reagenz (152; 252) mit einer bzw. der Probenflüssigkeit (150; 250) in dem Reaktionsraum (149; 249) nach dem Verschließen der Reaktionsraum-Öffnung (156; 280) mittels Pipettierspitze (114, 142; 214) die Probenflüssigkeit (150; 250) und das wenigstens eine Reagenz (152; 252) ein- oder mehrmals in die Pipettierspitze (114; 214) einsaugt und wieder abläßt.

7. Verfahren nach einem der Ansprüche 1 bis 6, dadurch gekennzeichnet, daß man die Pipettierspitze (114, 142; 214) in eine Verschlußposition bringt, die bei Ablauf der Reaktion einen sicheren Abschluß des Reaktionsraumes (149; 249) gewährleistet.

8. Verfahren nach einem der Ansprüche 1 bis 7, dadurch gekennzeichnet, daß man beim Ablauf der Reaktion die Ansaugöffnung (126) in die Reaktionsflüssigkeit (168) eintaucht, vorzugsweise bei zumindest weitgehend entleerter Pipettierspitze (114).

9. Verfahren nach einem der Ansprüche 1 bis 8, dadurch gekennzeichnet, daß man - bei Ausbildung der Reaktionsflüssigkeits-Aufnahmeeinheit (212, 212a) mit einem eine Ausnehmung (212, 256) zur Aufnahme der Reaktionsflüssigkeit aufweisenden Unterteil (212) und einem die Ausnehmung (212, 256) abdeckenden, die Reaktionsraum-Öffnung (280) für die Pipettierspitze (214) aufweisenden Oberteil (212a) in Form eines Aufnahmeelements - vor dem Aufsetzen des Aufnahmeelements (212a) auf das Unterteil (212) dieses mit Reagenz (252) befüllt, daß man vor oder gleichzeitig mit dem Einführen der Pipettierspitze (214) in die Reaktionsraum-Öffnung (280) das Aufnahmeelement (212a), das zusammen mit der Pipettierspitze (214) als Verschluß für den Reaktionsraum (249) dient, auf das Unterteil (212) aufsteckt und daß man den Reaktionsraum (249) durch Einsetzen der Pipettierspitze (214) in die Reaktionsraum-Öffnung (280) verschließt.

10. Verfahren nach Anspruch 9, dadurch gekennzeichnet, daß man die Pipettierspitze (214) in der Reaktionsraum-Öffnung (280) absenkt bzw. anhebt, während man die Probenflüssigkeit (250) und das wenigstens eine Reagenz (252) in die Pipettierspitze (214) einsaugt und wieder abläßt.

11. Pipettierspitze (114; 214) und Reaktionsflüssigkeits-Aufnahmeeinheit (112; 212, 212a) insbesondere zur Durchführung des Verfahrens nach einem der vorhergehenden Ansprüche, mit einer durch die Pipettierspitze (114, 142; 214) luftdicht verschließbaren Reaktionsraum-Öffnung (156; 280) eines Reaktionsraumes (149; 249) der Reaktionsflüssigkeits-Aufnahmeeinheit (112; 212, 212a), wobei in der Pipettierspitze (114, 142; 214) ein Pipettierkolben (134) axial beweglich und abdichtend geführt ist.

12. Pipettierspitze (114; 214) und Reaktionsflüssigkeits-Aufnahmeeinheit (112; 212, 212a) nach Anspruch 11, dadurch gekennzeichnet, daß die Reaktionsraum-Öffnung (156; 280) durch einen Vorderabschnitt (141; 241) der Pipettierspitze (114; 214) verschließbar ist.

13. Pipettierspitze (114) und Reaktionsflüssigkeits-Aufnahmeeinheit (112) nach Anspruch 11 oder 12, dadurch gekennzeichnet, daß die Reaktionsraum-Öffnung (156) formschlüssig durch die Pipettierspitze (114, 142) verschließbar ist, insbesondere durch Verrasten.

14. Pipettierspitze (114; 214.) und Reaktionsflüssigkeits-Aufnahmeeinheit (112; 212, 212a) nach einem der Ansprüche 11 bis 13, dadurch gekennzeichnet, daß die Reaktionsraum-Öffnung (156; 280) reibschlüssig durch die Pipettierspitze (114, 142; 214) verschließbar ist.

15. Pipettierspitze (114; 214) und Reaktionsflüssigkeits-Aufnahmeeinheit (112; 212, 212a) nach einem der Ansprüche 11 bis 14, dadurch gekennzeichnet, daß die Reaktionsraum-Öffnung (156; 280) und der Vorderabschnitt (141; 241) der Pipettierspitze (114; 214) und ggf. der Reaktionsraum (149; 249) zylindrisch ausgebildet sind.

16. Pipettierspitze (114) und Reaktionsflüssigkeits-Aufnahmeeinheit (112) nach einem der Ansprüche 11 bis 15, dadurch gekennzeichnet, daß die Reaktionsflüssigkeits-Aufnahmeeinheit (112) ein Verbindungselement (174, 178) für die Verbindung mit einem Reaktionsflüssigkeit-Aufnahmeeinheitsträger (172) aufweist.

17. Pipettierspitze (114) und Reaktionsflüssigkeits-Aufnahmeeinheit (112) nach einem der Ansprüche 11 bis 16, dadurch gekennzeichnet, daß der Vorderabschnitt (141) der Pipettierspitze (114) mit einem Abdichtelement versehen ist, das gegen die Reaktionsflüssigkeits-Aufnahmeeinheit (112) abgedichtet ist, vorzugsweise in Form eines Bundes (142).

18. Pipettierspitze (114) und Reaktionsflüssigkeits-Aufnahmeeinheit (112) nach einem der Ansprüche 11 bis 17, dadurch gekennzeichnet, daß der Bund (142) zur Ansaugöffnung (126) hin im wesentlichen konisch zuläuft.

19. Pipettierspitze (114; 214) und Reaktionsflüssigkeits-Aufnahmeeinheit (112; 212, 212a) nach einem der Ansprüche 11 bis 18, dadurch gekennzeichnet, daß ein Vorderabschnitt (141; 241) der Pipettierspitze (114; 214) mit einer Dichtung (142; 242) versehen ist, die gegen die Reaktionsflüssigkeits-Aufnahmeeinheit (112; 212, 212a) abgedichtet ist.

20. Pipettierspitze (114) und Reaktionsflüssigkeits-Aufnahmeeinheit (112) nach einem der Ansprüche 11 bis 19, dadurch gekennzeichnet, daß der Pipettierkolben (134) in der Ausstoßposition selbsthaltend ist.

21. Pipettierspitze (114) und Reaktionsflüssigkeits-Aufnahmeeinheit (112) nach einem der Ansprüche 11 bis 20, dadurch gekennzeichnet, daß die Reaktionsflüssigkeits-Aufnahmeeinheit (112) durchgehend einstückig ausgebildet ist.

22. Pipettierspitze (114) und Reaktionsflüssigkeits-Aufnahmeeinheit (112) nach Anspruch 21, dadurch gekennzeichnet, daß die Reaktionsflüssigkeits-Aufnahmeeinheit (112) von einem gesonderten Reaktionsgefäß gebildet ist.

23. Pipettierspitze (214) und Reaktionsflüssigkeits-Aufnahmeeinheit (212, 212a) nach einem der Ansprüche 11 bis 20, dadurch gekennzeichnet, daß die Reaktionsflüssigkeits-Aufnahmeeinheit (212, 212a) mehrteilig ausgebildet ist.

24. Pipettierspitze (214) und Reaktionsflüssigkeits-Aufnahmeeinheit (212, 212a) nach Anspruch 22 oder 23, dadurch gekennzeichnet, daß die im wesentlichen plattenförmige Reaktionsflüssigkeits-Aufnahmeeinheit (212, 212a) wenigstens eine jeweils einen Reaktionsraum (249) bildende Ausnehmung (212, 256) aufweist.

25. Pipettierspitze (214) und Reaktionsflüssigkeits-Aufnahmeeinheit (212, 212a) nach Anspruch 24, dadurch gekennzeichnet, daß die Reaktionsflüssigkeits-Aufnahmeeinheit (212, 212a) mit einem die wenigstens eine Ausnehmung (212, 256) zur Aufnahme der Reaktionsflüssigkeit (268) aufweisenden Unterteil (212) und einem die wenigstens eine Ausnehmung (212, 256) abdeckenden, die wenigstens eine Reaktionsraum-Öffnung (280) für die Pipettierspitze (214) aufweisenden Oberteil (212a) in Form eines Aufnahmeelements (212a) ausgebildet ist.

26. Pipettierspitze (214) und Reaktionsflüssigkeits-Aufnahmeeinheit (212, 212a) nach Anspruch 25, dadurch gekennzeichnet, daß der Unterteil (212) einen im wesentlichen plattenförmigen Unterbau besitzt, welcher wenigstens eine Ausnehmung (212, 256) zur formangepaßten Aufnahme wenigstens eines Reaktionsgefäßes (212) oder einer Mikrotiterplatte zur Aufnahme der Reaktionsflüssigkeit (268) aufweist.

27. Pipettierspitze (214) und Reaktionsflüssigkeits-Aufnahmeeinheit (212, 212a) nach einem der Ansprüche 25 oder 26, dadurch gekennzeichnet, daß die Öffnungsweite der Ausnehmung (212, 256) größer ist als die Öffnungsweite der Reaktionsraum-Öffnung (280).

28. Pipettierspitze (214) und Reaktionsflüssigkeits-Aufnahmeeinheit (212, 212a) nach einem der Ansprüche 25 bis 27, dadurch gekennzeichnet, daß das Aufnahmeelement (212a) mit einer als Reaktionsraum-Öffnung (280) ausgebildeten Durchführung (280) zur Aufnahme der Pipettierspitze (214) versehen ist, die im reaktionsgefäßnahen Bereich (286) zylindrisch ausgebildet ist und im reaktionsgefäßfernen Bereich (282) mit einer konischen Einlauföffnung (282) versehen ist, wobei der zylindrische Bereich (286) gegen die Pipettierspitze (214) abgedichtet ist.

29. Pipettierspitze (214) und Reaktionsflüssigkeits-Aufnahmeeinheit (212, 212a) nach einem der Ansprüche 25 bis 28, dadurch gekennzeichnet, daß das Aufnahmeelement (212a) wenigstens auf der reaktionsraumnahen Seite mit einer Beschichtung (212b) versehen ist.

## Claims

1. A method for carrying out chemical, in particular biochemical, reactions in a reaction liquid (168; 268) using a pipette tip (114; 214) of a pipetting device by means of which reaction liquid (168; 268) can be taken up through an aspiration orifice (126; 226) of the pipette tip (114; 214) for subsequent delivery into a reaction chamber (149; 249) of a reaction liquid receiving unit (112; 212, 212a), where at least a part or ingredient of the reaction liquid (168; 268) is transferred with the pipette tip (114; 214) into the reaction chamber (149; 249), and the reaction chamber (149; 249) is closed by sealing a reaction chamber orifice (156; 280) by means of the pipette tip (114, 142; 214) of the pipetting device, with the aspiration orifice (126; 226) of the pipette tip being located inside the reaction chamber (149; 249), and where the reaction is allowed to take place in the reaction chamber (149; 249),
**characterized in that**
a pipette tip (114, 142; 214) in which a pipette piston (134) can be moved axially and is guided sealingly is employed, and wherein the reaction chamber orifice (156; 280) is kept closed completely airtight by means of the pipette tip (114, 142; 214) while the reaction takes place.

2. A method as claimed in claim 1,
**characterized in that**
after completion of the reaction in the reaction chamber (149; 249), the connection between reaction liquid receiving unit (112; 212, 212a) and pipette tip (114; 214) is broken, and the reaction liquid (168; 268) is at least partly removed with the pipette tip (114; 214) from the reaction chamber (149; 249) for further utilization, in particular for analysis in a detection apparatus.

3. A method as claimed in claim 2,
**characterized in that**
the reaction liquid (168; 268) is taken up by the pipette tip (114; 214) with the reaction chamber (149; 249) closed.

4. A method as claimed in claim 3,
**characterized in that**
a reduction in pressure is produced when the reaction liquid (168; 268) is taken up in the reaction chamber (149; 249).

5. A method as claimed in any of claims 1 to 4,
**characterized in that**
to form the reaction liquid (168; 268) at least one sample liquid (150; 250) is first sucked into the pipette tip (114; 214) and then fed to the reagent (152; 252) in the reaction chamber (149; 249).

6. A method as claimed in any of claims 1 to 5,
**characterized in that**
to mix a, or the at least one, reagent (152; 252) with a or the sample liquid (150; 250) in the reaction chamber (149; 249) after closure of the reaction chamber orifice (156; 280) by means of the pipette tip (114, 142; 214), the sample liquid (150; 250) and the at least one reagent (152; 252) are sucked into the pipette tip (114; 214), and drained again, one or more times.

7. A method as claimed in any of claims 1 to 6,
**characterized in that**
the pipette tip (114, 142; 214) is put in a closure position which ensures secure closure of the reaction chamber (149; 249) while the reaction takes place.

8. A method as claimed in any of claims 1 to 7,
**characterized in that**
the aspiration orifice (126) is immersed in the reaction liquid (168) while the reaction takes place, preferably with the pipette tip (114) being at least substantially emptied.

9. A method as claimed in any of claims 1 to 8,
**characterized in that**
- when the reaction liquid receiving unit (212, 212a) is designed with a lower part (212) which has a recess (212, 256) to receive the reaction liquid and with an upper part (212a) which covers the recess (212, 256), has the reaction chamber orifice (280) for the pipette tip (214) and is in the form of a receiving element - before the receiving element (212a) is placed on the lower part (212) the latter is charged with reagent (252), wherein, before or at the same time as the introduction of the pipette tip (214) into the reaction chamber orifice (280), the receiving element (212a) which, together with the pipette tip (214), serves as closure for the reaction chamber (249) is placed on the lower part (212), and wherein the reaction chamber (249) is closed by inserting the pipette tip (214) into the reaction chamber orifice (280).

10. A method as claimed in claim 9,
**characterized in that**
the pipette tip (214) is lowered and raised in the reaction chamber orifice (280) while the sample liquid (250) and the at least one reagent (252) are sucked into the pipette tip (214) and drained off again.

11. A pipette tip (114; 214) and reaction liquid receiving unit (112; 212, 212a), in particular for carrying out the method as claimed in any of the preceding claims, with a reaction chamber orifice (156; 280). which can be closed airtight by the pipette tip to carry out 214), of a reaction chamber (149; 249) of the reaction liquid receiving unit (112; 212, 212a), with a pipette piston (134) being axially movable and guided sealingly in the pipette tip (114, 142; 214).

12. A pipette tip (114; 214) and reaction liquid receiving unit (112; 212, 212a) as claimed in claim 11,
**characterized in that**
the reaction chamber orifice (156; 280) can be closed by a front section (141; 241) of the pipette tip (114; 214).

13. A pipette tip (114) and reaction liquid receiving unit (112) as claimed in claim 11 or 12,
**characterized in that**
the reaction chamber orifice (156) can be closed positively by the pipette tip (114, 142), in particular by locking.

14. A pipette tip (114; 214) and reaction liquid receiving unit (112; 212, 212a) as claimed in any of claims 11 to 13,
**characterized in that**
the reaction chamber orifice (156; 280) can be closed frictionally by the pipette tip (114, 142; 214).

15. A pipette tip (114; 214) and reaction liquid receiving unit (112; 212, 212a) as claimed in any of claims 11 to 14,
**characterized in that**
the reaction chamber orifice (156; 280) and the front section (141; 241) of the pipette tip (114; 214) and, where appropriate, the reaction chamber (149; 249) are designed to be cylindrical.

16. A pipette tip (114) and reaction liquid receiving unit (112) as claimed in any of claims 11 to 15,
**characterized in that**
the reaction liquid receiving unit (112) has a connecting element (174, 178) for connection to a reaction liquid receiving unit carrier (172).

17. A pipette tip (114) and reaction liquid receiving unit (112) as claimed in any of claims 11 to 16,
**characterized in that**
the front section (141) of the pipette tip (114) is provided with a sealing element which is sealed against the reaction liquid receiving unit (112), preferably in the form of a collar (142).

18. A pipette tip (114) and reaction liquid receiving unit (112) as claimed in any of claims 11 to 17,
**characterized in that**
the collar (142) tapers essentially conically toward the aspiration orifice (126).

19. A pipette tip (114; 214) and reaction liquid receiving unit (112; 212, 212a) as claimed in any of claims 11 to 18,
**characterized in that**
a front section (141; 241) of the pipette tip (114; 214) is provided with a seal (142; 242) which is sealed against the reaction liquid receiving unit (112; 212, 212a).

20. A pipette tip (114) and reaction liquid receiving unit (112) as claimed in any of claims 11 to 19,
**characterized in that**
the pipette piston (134) is self-locking in the expulsion position.

21. A pipette tip (114) and reaction liquid receiving 21 unit (112) as claimed in any of claims 11 to 20.
**characterized in that**
the reaction liquid receiving unit (112) is designed to be completely in one piece.

22. A pipette tip (114) and reaction liquid receiving unit (112) as claimed in claim 21,
**characterized in that**
the reaction liquid receiving unit (112) is formed by a separate reaction vessel.

23. A pipette tip (214) and reaction liquid receiving unit (212, 212a) as claimed in any of claims 11 to 20,
**characterized in that**
the reaction liquid receiving unit (212, 212a) is designed in a plurality of parts.

24. A pipette tip (214) and reaction liquid receiving unit (212, 212a) as claimed in claim 22 or 23,
**characterized in that**
the essentially plate-like reaction liquid receiving unit (212, 212a) has at least one recess (212, 256) forming a reaction chamber (249) in each case.

25. A pipette tip (214) and reaction liquid receiving unit (212, 212a) as claimed in claim 24,
**characterized in that**
the reaction liquid receiving unit (212, 212a) is designed with a lower part (212), which has the at least one recess (212, 256) to receive the reaction liquid (268), and an upper part (212a), which covers the at least one recess (212, 256) and has the at least one reaction chamber orifice (280) for the pipette tip (214), in the form of a receiving element (212a) .

26. A pipette tip (214) and reaction liquid receiving unit (212, 212a) as claimed in claim 25,
**characterized in that**
the lower part (212) has an essentially plate-like substructure which has at least one recess (212, 256) to receive, adapted to the shape, at least one reaction vessel (212) or one microtiter plate or the like to receive the reaction liquid (268).

27. A pipette tip (214) and reaction liquid receiving unit (212, 212a) as claimed in any of claims 25 to 26,
**characterized in that**
the orifice width of the recess (212, 256) is greater than the orifice width of the reaction chamber orifice (280).

28. A pipette tip (214) and reaction liquid receiving
unit (212, 212a) as claimed in any of claims 25 to 27,
**characterized in that**
the receiving element (212a) is provided with a duct (280), designed as reaction chamber orifice (280), to receive the pipette tip (214) which, in the region (286) close to the reaction vessel, is designed to be cylindrical and, in the region (282) remote from the reaction vessel, is provided with a conical inlet orifice (282), with the cylindrical region (286) being sealed against the pipette tip (214).

29. A pipette tip (214) and reaction liquid receiving unit (212, 212a) as claimed in any of claims 25 to 28,
**characterized in that**
the receiving element (212a) is provided with a coating (212b) at least on the side close to the reaction chamber.

## Revendications

1. Procédé pour la mise en oeuvre de réactions chimiques, notamment de réactions biochimiques, dans un liquide de réaction (168 ; 268), par utilisation d'une pointe de pipette (114 ; 214) d'un dispositif à pipette au moyen duquel du liquide de réaction (168 ; 268) peut être capté à travers un orifice d'aspiration (126 ; 226) de la pointe de pipette (114 ; 214), pour être délivré ensuite à une chambre de réaction (149; 249) d'une unité de réception (112 ; 212, 212a) du liquide de réaction, dans lequel on transfère au moins une partie ou un composant partiel du liquide de réaction (168 ; 268), au moyen de la pointe de pipette (114 ; 214), dans la chambre de réaction (149 ; 249) et, pour fermer la chambre de réaction (149 ; 249), on ferme un orifice de chambre de réaction (156 ; 280), au moyen de la pointe de pipette (114, 142 ; 214) du dispositif à pipette, l'orifice d'aspiration (126 ; 226) de la pointe de pipette se situant à l'intérieur de la chambre de réaction (149 ; 249), et dans lequel on laisse se dérouler la réaction dans la chambre de réaction (149 ; 249),
caractérisé
en ce qu'on utilise une pointe de pipette (114, 142 ; 214) dans laquelle un piston de pipette (134) est monté déplaçable axialement et de manière étanche, et en ce que pendant le déroulement de la réaction, on maintient l'orifice de chambre de réaction (156 ; 280) totalement fermé de manière étanche à l'air, au moyen de la pointe de pipette (114, 142 ; 214).

2. Procédé selon la revendication 1, caractérisé en ce qu'au terme du déroulement de la réaction dans la chambre de réaction (149 ; 249), on supprime la liaison entre l'unité de réception (112 ; 212, 212a) du liquide de réaction et la pointe de pipette (114 ; 214), et on prélève, au moins partiellement, le liquide de réaction (168; 268) de la chambre de réaction (149 ; 249), au moyen de la pointe de pipette (114; 214), en vue d'une utilisation ultérieure, notamment de l'analyse dans un appareillage de détection.

3. Procédé selon la revendication 2, caractérisé en ce qu'on capte le liquide de réaction (168; 268) au moyen de la pointe de pipette (114; 214), avec chambre de réaction (149 ; 249) fermée.

4. Procédé selon la revendication 3, caractérisé en ce qu'on génère une dépression pendant que l'on recueille le liquide de réaction (168 ; 268) dans la chambre de réaction (149 ; 240).

5. Procédé selon l'une des revendications 1 à 4, caractérisé en ce que pour former le liquide de réaction (168; 268), on aspire d'abord au moins un échantillon de liquide (150 ; 250) dans la pointe de pipette (114 ; 214), et on l'achemine ensuite vers le réactif (152; 252) dans la chambre de réaction (149; 249).

6. Procédé selon l'une des revendications 1 à 5, caractérisé en ce que pour mélanger le ou l'un des réactifs (152 ; 252) avec un ou l'échantillon de liquide (150; 250) dans la chambre de réaction (149; 249), après fermeture de l'orifice de chambre de réaction (156 ; 280), on aspire une ou plusieurs fois, au moyen de la pointe de pipette (114, 142 ; 214), l'échantillon de liquide (150 ; 250) et le ou les réactif(s) (152 ; 252) dans la pointe de pipette (114 ; 214), et on les laisse s'écouler à nouveau.

7. Procédé selon l'une des revendications 1 à 6, caractérisé en ce qu'on amène la pointe de pipette (114, 142; 214) dans une position de fermeture qui garantit une fermeture sûre de la chambre de réaction (149 ; 249), pendant le déroulement de la réaction.

8. Procédé selon l'une des revendications 1 à 7, caractérisé en ce que pendant le déroulement de la réaction, on immerge l'orifice d'aspiration (126) dans le liquide de réaction (168), de préférence avec la pointe de pipette (114) au moins largement vidée.

9. Procédé selon l'une des revendications 1 à 8, caractérisé en ce que - dans le cas où l'unité de réception du liquide de réaction (212, 212a) comporte une partie inférieure (212) qui présente un évidement (212, 256) destiné à recueillir le liquide de réaction, ainsi qu'une partie supérieure (212a) sous la forme d'un élément de réception qui recouvre l'évidement (212, 256) et qui présente l'orifice de chambre de réaction (280) pour la pointe de pipette (214) - avant de placer l'élément de réception (212a) sur la partie inférieure (212), on le remplit de réactif (252), en ce qu'avant ou pendant que l'on introduit la pointe de pipette (214) dans l'orifice de chambre de réaction (280), on emboîte l'élément de réception (212a), qui avec la pointe de pipette (214) sert de fermeture à la chambre de réaction (249), sur la partie inférieure (212) et en ce qu'on ferme la chambre de réaction (249) par insertion de la pointe de pipette (214) dans l'orifice de chambre de réaction (280).

10. Procédé selon la revendication 9, caractérisé en ce qu'on abaisse ou relève la pointe de pipette (214) dans l'orifice de chambre de réaction (280), pendant que l'on aspire l'échantillon de liquide (250) et le ou les réactifs (252) dans la pointe de pipette (214) et qu'on les laisse à nouveau s'écouler.

11. Pointe de pipette (114 ; 214) et unité de réception du liquide de réaction (112 ; 212, 212a), notamment pour la mise en oeuvre du procédé selon l'une des revendications précédentes, comportant un orifice de chambre de réaction (156 ; 280), qui peut être fermé de manière étanche à l'air, au moyen de la pointe de pipette (114, 142 ; 214), d'une chambre de réaction (149 ; 249) de l'unité de réception du liquide de réaction (112; 212, 212a), un piston de pipette (134) étant monté déplaçable axialement et de manière étanche dans la pointe de pipette (114, 142 ; 214).

12. Pointe de pipette (114 ; 214) et unité de réception du liquide de réaction (112 ; 212, 212a) selon la revendication 11, caractérisées en ce que l'orifice de chambre de réaction (156 ; 280) peut être fermé par une portion avant (141 ; 241) de la pointe de pipette (114 ; 214).

13. Pointe de pipette (114) et unité de réception du liquide de réaction (112) selon la revendication 11 ou 12, caractérisées en ce que l'orifice de chambre de réaction (156) peut être fermé par complémentarité de forme par la pointe de pipette (114, 142), notamment par encliquetage.

14. Pointe de pipette (114 ; 214) et unité de réception du liquide de réaction (112 ; 212, 212a) selon l'une des revendications 11 à 13, caractérisées en ce que l'orifice de chambre de réaction (156 ; 280) peut être fermé par friction par la pointe de pipette (114, 142 ; 214).

15. Pointe de pipette (114 ; 214) et unité de réception du liquide de réaction (112 ; 212, 212a) selon l'une des revendications 11 à 14, caractérisées en ce que l'orifice de chambre de réaction (156 ; 280) et la portion avant (141 ; 241) de la pointe de pipette (114 ; 214) et éventuellement la chambre de réaction (149 ; 249) sont de forme cylindrique.

16. Pointe de pipette (114) et unité de réception du liquide de réaction (112) selon l'une des revendications 11 à 15, caractérisées en ce que l'unité de réception du liquide de réaction (112) comporte un élément de liaison (174, 178) pour la liaison avec un support d'unité de réception de liquide de réaction (172).

17. Pointe de pipette (114) et unité de réception de liquide de réaction (112) selon l'une des revendications 11 à 16, caractérisées en ce que la portion avant (131) de la pointe de pipette (114) est pourvue d'un élément d'étanchéité qui est rendu étanche par rapport à l'unité de réception de liquide de réaction (112), de préférence sous la forme d'un épaulement (142).

18. Pointe de pipette (114) et unité de réception de liquide de réaction (112) selon l'une des revendications 11 à 17, caractérisées en ce que l'épaulement (142) se termine sensiblement coniquement vers l'orifice d'aspiration (126).

19. Pointe de pipette (114; 214) et unité de réception de liquide de réaction (112 ; 212, 212a) selon l'une des revendications 11 à 17, caractérisées en ce qu'une portion avant (141 ; 241) de la pointe de pipette (114 ; 214) est pourvue d'une partie d'étanchéité (142; 242) qui est rendue étanche par rapport à l'unité de réception de liquide de réaction (112 ; 212, 212a).

20. Pointe de pipette (114) et unité de réception de liquide de réaction (112) selon l'une des revendications 11 à 19, caractérisées en ce que le piston de pipette (134) se maintient de lui-même dans la position d'éjection.

21. Pointe de pipette (114) et unité de réception de liquide de réaction (112) selon l'une des revendications 11 à 20, caractérisées en ce que l'unité de réception de liquide de réaction (112) est réalisée d'une seule pièce de bout en bout.

22. Pointe de pipette (114) et unité de réception de liquide de réaction (112) selon la revendication 21, caractérisées en ce que l'unité de réception de liquide de réaction (112) est formée par un récipient de réaction séparé.

23. Pointe de pipette (214) et unité de réception de liquide de réaction (212, 212a) selon l'une des revendications 11 à 20, caractérisées en ce que l'unité de réception de liquide de réaction (212, 212a) est réalisée en plusieurs parties.

24. Pointe de pipette (214) et unité de réception de liquide de réaction (212, 212a) selon la revendication 22 ou 23, caractérisées en ce que l'unité de réception de liquide de réaction (212, 212a), sensiblement en forme de plaque, comporte au moins un évidement (212, 256), chacun formant une chambre de réaction (249).

25. Pointe de pipette (214) et unité de réception de liquide de réaction (212, 212a) selon la revendication 24, caractérisées en ce que l'unité de réception de liquide de réaction (212, 212a) comporte une partie inférieure (212) qui présente au moins un évidement (212, 256) pour recueillir le liquide de réaction (268), ainsi qu'une partie supérieure (212a) sous la forme d'un élément de réception (212a), qui recouvre au moins un évidement (212, 256) et qui présente au moins un orifice de chambre de réaction (280) pour la pointe de pipette (214).

26. Pointe de pipette (214) et unité de réception de liquide de réaction (212, 212a) selon la revendication 25, caractérisées en ce que la partie inférieure (212) possède une infrastructure sensiblement en forme de plaque qui présente au moins un évidement (212, 256) pour recevoir, par adaptation des formes, au moins un récipient de réaction (212) ou une micro-plaque de titrage pour recueillir le liquide de réaction (268).

27. Pointe de pipette (214) et unité de réception de liquide de réaction (212, 212a) selon l'une des revendications 25 ou 26, caractérisées en ce que la largeur d'ouverture de l'évidement (212, 256) est supérieure à la largeur d'ouverture de l'orifice de chambre de réaction (280).

28. Pointe de pipette (214) et unité de réception de liquide de réaction (212, 212a), selon l'une des revendications 25 à 27, caractérisées en ce que l'élément de réception (212a) est pourvu d'un passage (280), conformé en orifice de chambre de réaction (280), pour recevoir la pointe de pipette (214), qui est de conformation cylindrique dans sa zone (286) voisine du récipient de réaction et qui est pourvu d'un orifice d'entrée conique (282) dans sa zone (282) éloignée du récipient de réaction, sa zone cylindrique (286) étant rendue étanche par rapport à la pointe de pipette (114).

29. Pointe de pipette (214) et unité de réception de liquide de réaction (212, 212a) selon l'une des revendications 25 à 28, caractérisées en ce que l'élément de réception (212a) est pourvu d'un revêtement (212b), au moins sur le côté proche de la chambre de réaction.
